(19) Europäisches Patentamt
European Patent Office
Office européen des brevets

(11) Veröffentlichungsnummer : **0 024 680**
**B1**

(12) # EUROPÄISCHE PATENTSCHRIFT

(45) Veröffentlichungstag der Patentschrift : **09.06.82**

(21) Anmeldenummer : **80104937.0**

(22) Anmeldetag : **20.08.80**

(51) Int. Cl.³ : **C 09 D 3/66**, C 09 D 3/727, C 09 D 3/58, C 08 K 5/34, C 08 L 67/00, C 08 L 33/02, C 08 L 33/04, C 08 L 35/00, C 08 L 25/00

(54) **Pulverlackbindemittel und Verfahren zu ihrer Herstellung.**

(30) Priorität : **01.09.79 DE 2935446**

(43) Veröffentlichungstag der Anmeldung : **11.03.81 (Patentblatt 81/10)**

(45) Bekanntmachung des Hinweises auf die Patenterteilung : **09.06.82 Patentblatt 82/23**

(84) Benannte Vertragsstaaten : **CH DE FR GB IT LI**

(56) Entgegenhaltungen : **Keine**

(73) Patentinhaber : **BAYER AG**
**Zentralbereich Patente, Marken und Lizenzen**
**D-5090 Leverkusen 1, Bayerwerk (DE)**

(72) Erfinder : **Rottmaier, Ludwig, Ing. grad.**
**Bergstrasse 85**
**D-5068 Odenthal (DE)**
Erfinder : **Merten, Rudolf, Dr.**
**Berta-von-Suttner-Strasse 55**
**D-5090 Leverkusen 1 (DE)**
Erfinder : **Dhein, Rolf, Dr.**
**Deswatinesstrasse 30**
**D-4150 Krefeld 1 (DE)**
Erfinder : **Kreuder, Hans Joachim, Dr.**
**Doerperhofstrasse 35**
**D-4150 Krefeld 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

EP 0 024 680 B1

# Pulverlackbindemittel und Verfahren zu ihrer Herstellung

Die vorliegende Erfindung betrifft Pulverlackbindemittel aus carboxylgruppenhaltigen Polymeren und N,N',N"-Triglycidyl-triazolidin-3,5-dionen, sowie ein Verfahren zur ihrer Herstellung.

Pulverförmige Bindemittel sollen im unvernetzten Zustand spröde, leicht pulverisierbare Harze darstellen, die als Pulver bei Temperatur bis 60 °C noch rieselfähig bleiben und nicht klumpen. Die Pulver sollen bei Temperaturen von 80 °C bis 120 °C nach Auftragung auf dem Untergrund glatt verlaufen und bei Temperaturen ab 130 °C zu unlöslichen und unschmelzbaren Überzügen einbrennen. Im Falle der elektrostatischen Pulversprühverfahren (EPS-Verfahren) müssen die Pulver elektrostatisch aufladbar sein und die elektrische Ladung auf Metallgegenständen einige Zeit bis zum Einbrennvorgang halten. Auch dürfen solche Bindemittel im Bereich ihrer Verlaufstemperatur nicht vorzeitig vernetzen, da sie im allgemeinen in der Schmelze bei Temperaturen um 100 °C mit Pigmenten, Katalysatoren und Verlaufsmitteln vermischt werden. Enthalten die Bindemittel einen externen Vernetzer, wie in dem erfindungsgemäßen Bindemitteln, so muß die als Vernetzer wirkende Komponente bei Temperaturen, bei denen auch die zu vernetzende Komponente schmilzt, schmelzen, mit dieser verträglich und homogen mischbar sein. Beim Erstarren der Mischung darf der zugesetzte Vernetzer auch nicht die Lagerfähigkeit bis 50 °C verschlechtern, noch darf sich das System beim Erkalten wieder entmischen. Die verträgliche Mischung von Vernetzer und zu vernetzender Komponente soll nach dem Verlauf und dem Einbrennvorgang einen hochglänzenden, chemikalien- und lösungsmittelfesten und witterungsbeständigen Überzug liefern.

Die Herstellung von pulverförmigen Bindemittel und ihre Verwendung nach den verschiedenden Auftragsverfahren z.B. nach dem EPS-Verfahren sind bekannt. So werden Bindemittel aus carboxylgruppenhaltigen Polymeren und Triglycidylisocyanurat und/oder Glycidylestern in der DE-B 1 905 825, DE-B 2 163 962 und DE-B 2 127 684 beschrieben.

Triglycidylisocyanurat ist im Prinzip keine beständige Verbindung, da der Isocyanuratring, der als trimerisiertes Isocyanat anzusehen ist, thermisch in das entsprechende Isocyanat gespalten werden kann (siehe US-Patent 2 580 468), welches dann zu Nebenreaktionen und somit z.B. zu Vergilbungen eines Lackes führen kann.

Nachteilig bei den beschriebenen Bindemittelsystemen mit Triglycidylisocyanurat ist ferner die Tatsache, daß eine den praktischen Anforderungen entsprechende Reaktivität nur dann zu erzielen ist, wenn die Säurezahl der Carboxyl-Polyester zwischen 60 und 110 mg KOH/g Substanz liegt. Innerhalb dieser Grenzen in der Säurezahl ist indessen als unerwünschte Erscheinung eine Vorreaktion beider Komponenten bei der Extrusion und/oder bei der Lagerung der gebrauchsfertigen Pulverlacke zu beobachten. Pulverlacke, die als Bindemittelbasis ein derartiges System enthalten, sind bei Temperaturen von 20 °C bis 25 °C in der Regel nur bis zu 6 Monaten ohne Einbuße des erzielbaren Eigenschaftsbildes lagerfähig.

Bindemittelsysteme, die auf Carboxyl-Polyester mit niedrigeren Säurezahlen und Triglycidylisocyanurat basieren, zeigen zwar eine deutlich verbesserte Lagerfähigkeit. Sie verhalten sich indessen im Hinblick auf die Reaktivität, (Einbrennbedingungen) deutlich ungünstiger und bedürfen höherer Einbrenntemperaturen und/oder längerer Einbrennzeiten.

Eine ähnliche, jedoch noch stärker ausgeprägte Abhängigkeit von der Säurezahl der Harzkomponente zeigt sich bei der Härtung des Systems aus Carboxylacrylaten und Triglycidylisocyanurat gemäß DE-A 2 202 842. In diesen Fällen zeigt sich, daß auch bei Säurezahlen des Carboxylacrylates von unter 50 mg KOH/g Substanz noch keine ausreichende Lagerfähigkeit erreicht wird, was zur Folge hatte, daß die in DE-A 2 317 578 beschriebenen Harz/Härtersysteme keine praktische Anwendung fanden.

Es wurden nun Pulverlackbindemittel gefunden, die die Nachteile von Triglycidylisocyanurat in Kombination mit carboxylgruppenhaltigen Polymeren nicht aufweisen und die nach dem Wirbelsinterverfahren, dem Flammspritzverfahren, dem EPS-Verfahren oder anderen üblichen Pulverauftragsverfahren verarbeitbar sind. Diese Pulverlackbindemittel sind aus Mischungen von carboxylgruppenhaltigen Polymeren und N,N',N"-Triglycidyl-triazolidin-3,5-dionen aufgebaut.

Gegenstand der Erfindung sind somit Pulverlackbindemittel aus homogenen, vernetzbaren Mischungen von mindestens einem, mehr als eine Carboxylgruppe enthaltenden Polymeren und einer 1,2-Polyepoxidverbindung, dadurch gekennzeichnet, daß die 1,2-Polyepoxidverbindung, ein N,N',N"-Triglycidyl-triazolidin-3,5-dion mit einem Epoxidwert von 0,6 bis 1,13 ist.

Die in den erfindungsgemäßen Pulverlackbindemitteln enthaltenen 1,2-Polyepoxide entsprechen der Formel (I)

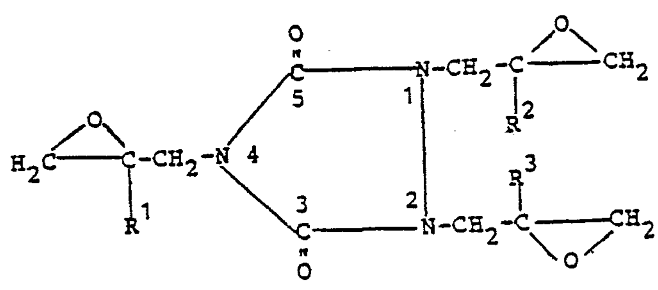

(I)

worin $R^1$, $R^2$ und $R^3$ gleich oder verschieden ein Wasserstoffatom oder eine Methylgruppe, vorzugsweise Wasserstoff bedeuten. Sie können erhalten werden, indem man das bekannte Triazolidin-3,5-dion der Formel (II)

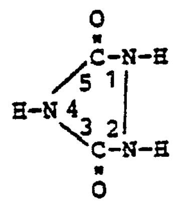

(II)

mit überschüssigem Epichlorhydrin oder β-Methylepichlorhydrin in Gegenwart eines geeigneten Katalysators, z.B. Triethylamin in an sich bekannter Weise bei 20-200 °C zum Triazolidin-3,5-dion-trischlorhydrin umsetzt und anschließend mit Chlorwasserstoff abspaltenden Mitteln wie wäßriger Natronlauge bei 20-120 °C behandelt. Die erhaltenen N,N',N''-Triglycidyl-triazolidin-3,5-dione (Rohprodukte) besitzen Epoxidwerte von 0,6 bis 1,13, vorzugsweise von 0,85 bis 1,13.

Das reine N,N',N''-Triglycidyl-triazolidin-3,5-dion (Formel I $R^1$, $R^2$, $R^3$ = H) besitzt einen Epoxidwert von 1,13. Niedrigere Epoxidwerte deuten auf einen Gehalt an oligomeren Produkten, d.h., höhermolekularen Anteilen, hin. So enthält beispielsweise ein N,N',N''-Triglycidyl-triazolidin-3,5-dion mit einem Epoxidwert von 0,93 80 Gew.-% reine Verbindung der Formel I ($R^1$, $R^2$, $R^3$ = H ; Fp : 103-104 °C). Die oligomeren Produkte werden durch Reaktion der aktiven, an Stickstoff gebundenen Wasserstoffatome des 1,2,4-Triazolidin-3,5-dions, des Mono-, oder Diglycidyl-triazolidin-3,5-dions oder deren Mischungen mit den 1,2-Epoxidgruppen (= Glycidylgruppen) des Mono-, Di- oder Triglycidyl-triazolidin-3,5-dions bzw. deren Mischungen und/oder mit den Halogenenhydringruppen der vorgenannten Glycidyl-triazolidin-3,5-dione gebildet. Von der Herstellung her können die Polyglycidylverbindungen des 1,2,4-Triazolidin-3,5-dions noch verseifbares Chlor (bis ca. 5 Gew.-%) enthalten, das durch weitere Behandlung mit Halogenwasserstoff abspaltenden Mitteln, falls gewünscht, praktisch vollständig entfernt werden kann und zumindest teilweise den Gehalt an Epoxidgruppen erhöht.

Unter dem Epoxidwert wird die Anzahl der Grammäquivalente an 1,2-Epoxidgruppen verstanden, die in 100 g Substanz enthalten ist. Das Epoxidäquivalent ist definiert als die Grammenge Substanz, in der eine 1,2-Epoxidgruppe enthalten ist. Eine 1,2-Epoxidgruppe ist einem Mol Halogenwasserstoff äquivalent.

Selbstverständlich können die N,N',N''-Triglycidyl-triazolidin-3,5-dione auch mit anderen Epoxidharzen gemischt werden. Voraussetzung ist hierbei immer, daß die nach Abmischung mit Carboxylgruppen enthaltenden Polymeren und gegebenenfalls weiteren Zusatzstoffen erhaltenen pulverförmigen Beschichtungsmittel rieselfähig bleiben und nicht klumpen und nach Auftragung auf dem Untergrund glatt verlaufen, bevor die Überzüge in den duroplastischen Zustand übergehen. Als Beispiele für solche Epoxidharze seien genannt : Triglycidylisocyanurat, 1,3-Bis-glycidyl-imidazolidin-2,4-dione, Glycidylester von z.B. Terephthalsäure, Isophthalsäure oder Benzoltricarbonsäuren, 1,2-Epoxidharze auf Basis von Bisphenolen wie z.B. 2,2-Bis-(4-hydroxyphenyl)-propan oder Bis-(4-hydroxyphenyl)-methan.

Die carboxylgruppenhaltigen Polymeren sollen einen Schmelz- und Erweichungsbereich (DTA = Differential-Thermo-Analyse) von 20 °C-150 °C, vorzugsweise 50 °C-120 °C, und eine Säurezahl von 10-150 mg KOH/g Substanz, vorzugsweise 20-120 mg KOH/g Substanz haben, insbesondere von 30-50 mg KOH/g Substanz. Die OH-Zahlen sollen vorzugsweise unter 20, insbesondere unter 10 liegen.

Diese carboxylgruppenhaltigen Polymeren können Polyesterpolycarbonsäuren sein, welche aus Polyolen und Polycarbonsäuren bzw. deren Derivaten hergestellt werden.

Die Veresterungsreaktion zum Aufbau der erfindungsgemäß zu verwendenden Polyesterpolycarbonsäuren kann nach bekannten Verfahren durch Veresterung entsprechender Polycarbonsäuren und Polyolen, insbesondere Dicarbonsäuren und Dialkoholen oder durch Esterbildung geeigneter Derivate dieser Alkohole und Carbonsäuren wie z.B. die Anhydride, Säurechloride und dgl. sowie auch Hydroxycarbonsäuren hergestellt werden.

Durch den Einbau von mindestens drei Carboxylgruppenenthaltender Polycarbonsäuren bzw. deren Anhydride wie Benzol-1,3,5-tricarbonsäure oder Trimellitsäureanhydrid werden besonders bevorzugte verzweigte, d.h. mindestens trisfunktionelle Polyester-Polycarbonsäuren erhalten.

Es können jedoch auch verzweigte Polyesterpolycarbonsäuren verwendet werden, welche durch den Einbau von vorzugsweise aliphatischen, mindestens drei Hydroxylgruppen tragenden Polyolen wie Trimethylolpropan oder Glycerin erhältlich sind.

Zur Herstellung der erfindungsgemäß zu verwendenden Polyester-polycarbonsäuren einzusetzende Polycarbonsäuren sind insbesondere solche der allgemeinen Formel

$$A-(COOH)_x$$

geeignet, wobei A eine Bindung oder einen x-wertigen, gegebenenfalls substituierten aliphatischen Rest mit vorzugsweise 1-20 C-Atomen, einen cycloaliphatischen Rest mit vorzugsweise 5-16 C-Atomen, einen aliphatisch-aromatischen Rest mit vorzugsweise 7-20 C-Atomen, einen aromatischen Rest mit vorzugsweise 6-15 C-Atomen, oder einen Heteroatome wie N,O oder S im Ring enthaltenden aromatischen oder cycloaliphatischen Rest mit 2-12 C-Atomen und x eine ganze Zahl von 2 bis 4, vorzugsweise 2 und 3, bedeuten.

Derartige Polycarbonsäuren können beispielsweise sein :

Oxalsäure, Malonsäure, Bernsteinsäure, Glutarsäure, Adipin-, Trimethyladipinsäure, Sebacinsäure, Decandicarbonsäure, Dodecandicarbonsäure, Fumarsäure, Maleinsäure, Hexahydroterephthalsäure, Phthalsäure, Isophthalsäure, Terephthalsäure, Benzol-1,3,5-tricarbonsäure, Benzol-1,2,4-tricarbonsäure, Benzol-1,2,3-tricarbonsäure, Naphthalin-1,5-dicarbonsäure, Benzophenon-4,4'-dicarbonsäure, Diphenylsulfon-4,4'-dicarbonsäure, Butantetracarbonsäure, Tricarballylsäure, Ethylentetracarbonsäure, Pyromellitsäure, Benzol-1,2,3,4-tetracarbonsäure, Benzol-1,2,3,5-tetracarbonsäure sowie

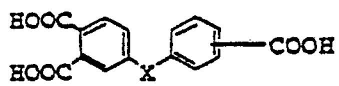

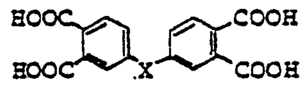

mit X = 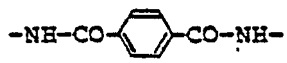

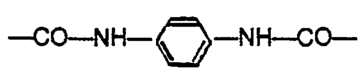

$—O—$, $—S—$, $—SO_2—$, $—CO—$

$—N{=}N—$, $—CH_2—$, $CH_3—\overset{|}{\underset{|}{C}}—CH_3$

Als Hydroxycarbonsäuren sind solche der allgemeinen Formel

$$(HOOC)_y—A—(OH)_z$$

geeignet, in der A die oben angeführten Bedeutungen hat und y sowie z unabhängig voneinander eine ganze Zahl von 1-3, vorzugsweise 1 oder 2 sein können.

Als Beispiele seien Glycolsäure, Milchsäure, Mandelsäure, Apfelsäure, Zitronensäure, Weinsäure, 2-, 3- oder 4-Hydroxybenzoesäure sowie Hydroxybenzoldicarbonsäuren aufgeführt.

Die zur Herstellung der erfindungsgemäß einzusetzenden Polyesterpolycarbonsäuren erforderlichen Polyole sind insbesondere solche der allgemeinen Formel

$$B—(OH)_a$$

worin B einen $\alpha$-wertigen aliphatischen Rest mit $C_2$-$C_{20}$, einen cycloaliphatischen rest mit $C_5$-$C_{16}$, einen aliphatischen Rest mit $C_7$-$C_{20}$, einen aromatischen Rest mit $C_6$-$C_{15}$ und einen N, O oder S enthaltenden heterocyclischen Rest mit $C_2$-$C_{12}$ und a eine ganze Zahl von 2 bis 6, vorzugsweise 2 und 3 bedeuten.

Als Beispiele derartiger Polyole seien aufgeführt :

Ethylenglycol, 1,2-, 2,3-Propandiol, 1,2-, 1,3-, 1,4-, 2,3-Butandiol, 1,5-Pentandiol, 2,2-Dimethyl-1,3-propandiol, 1,6-, 2,5-Hexandiol, 1,12-Dodecandiol, 1,12-Octadecandiol, 2,2,4-, 2,4,4-Trimethyl-1,6-hexandiol, Trimethylolpropan, Trimethylolethan, Glycerin, 1,2,6-Hexantriol, Pentaerythrit, Mannit, 1,4-Bis-hydroxymethyl-cyclohexan, Cyclohexan-1,4-diol, 2,2-Bis-(4-hydroxycyclohexyl)-propan, Bis-(4-hydroxyphenyl)-methan, Bis-(4-hydroxyphenyl)-sulfon, 1,4-Bis-hydroxymethyl-benzol, 1,4-Dihydroxybenzol, 2,2-Bis-(4-Hydroxyphenyl)-propan, 1,3-Bis-hydroxyalkylhydantoine, Trishydroxyalkylisocyanurate und Trishydroxyalkyl-triazolidin-3,5-dione.

Weitere Polyole, die zur Herstellung der erfindungsgemäß einzusetzenden Polyesterpolycarbonsäuren geeignet sind, sind die durch Addition von gegebenenfalls substituierten Alkylenoxiden wie Ethylenoxid, Propylenoxid, Butylenoxid, Styroloxid an die oben erwähnten Polyole entstandenen Hydroxyalkylether der allgemeinen Formel

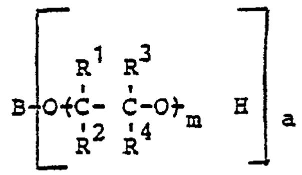

worin B und a die oben angegebene Bedeutung haben, m für eine ganze Zahl von 1 bis 7 und $R^1$, $R^2$, $R^3$ und $R^4$ gleich oder verschieden, unabhängig voneinander für Wasserstoff, einen gegebenenfalls mit Halogen substituierten aliphatischen $C_1$-$C_{10}$, cycloaliphatischen $C_4$-$C_8$, araliphatischen $C_7$-$C_{17}$ oder einen gegebenenfalls mit Halogen, Alkyl und/oder Alkoxy substituierten aromatischen $C_6$-$C_{16}$ Rest stehen. Vorzugsweise bedeuten $R^1$, $R^2$, $R^3$ und $R^4$ Wasserstoff, einen Alkylrest mit $C_1$-$C_4$, vorzugsweise Methyl, Ethyl oder einen gegebenenfalls mit Halogenatomen (Chlor, Brom), $C_1$-$C_4$-Alkylresten und/oder mit $C_1$-$C_4$-Alkoxygruppen substituierten $C_6$-$C_{12}$-Arylrest, vorzugsweise Phenyl.

Derartige Polyole können beispielsweise sein :

Diethylenglykol, Triethylenglykol, Dipropylenglykol, Tripropylenglykol, Dibutylenglykol, 1,4-Bis-[2-hydroxy-ethoxy]-cyclohexan, 1,4-Bis-[2-hydroxy-ethoxy-methan]-cyclohexan, 1,4-Bis-[2-hydroxy-ethoxy]-benzol, 4,4'-Bis-[2-hydroxyethoxy]-diphenylmethan, -diphenylpropan-2, -diphenylether, -diphenylsulfon, -diphenylketon und -diphenylcyclohexan.

Selbstverständlich können die einzusetzenden Carbonsäuren bzw. Carbonsäurederivate und die zu verwendenden Polyole auch polymerer Natur sein. So können hier beispielsweise Bisbenzol-dicarbonsäureester der Strukturformel

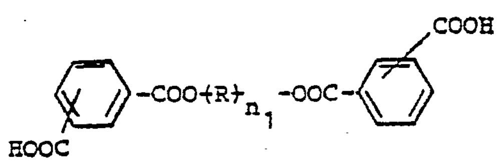

und Bisalkandicarbonsäureester der Strukturformel

$$HOOC-(CH_2)_{n_2}-COO-(R)_{n_1}-OOC-(CH_2)_{n_3}-COOH$$

eingesetzt werden.

R bedeutet darin einen mindestens zweiwertigen aromatischen Rest mit $C_6$-$C_{15}$, einen araliphatischen Rest mit $C_7$-$C_{20}$, einen gesättigten oder ungesättigten aliphatischen Rest mit $C_2$-$C_{20}$, einen cycloaliphatischen Rest mit $C_5$-$C_{15}$, der mit aromatischen ($C_6$-$C_{12}$), cycloaliphatischen ($C_4$-$C_{12}$) oder heterocyclischen ($C_2$-$C_{12}$) Ringsystemen kondensiert sowie über Ether-, Keto-, Ester- oder Sulfonbrücken verbunden und der ggf. durch Halogen, Nitro- oder Alkoxygruppen mit $C_1$-$C_{20}$ substituiert sein kann, $n_1$ für eine ganze Zahl von 1-20, $n_2$ und $n_3$ gleich oder verschieden, für eine ganze Zahl von 0 bis 20 steht.

Mögliche Beispiele für $(R)_{n_1}$ sind :

$-(CH_2)_2-$, $-(CH_2)_5-$, 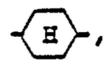, 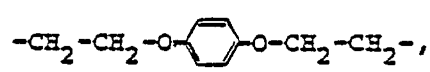,

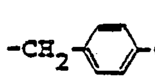, $-(CH_2)_2-O-(CH_2)_2-$, 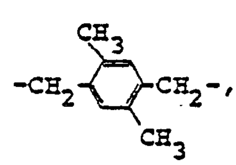,

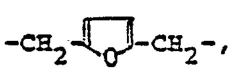, 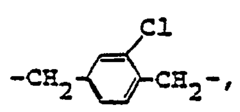, $-CH_2-CH=CH-CH_2-$,

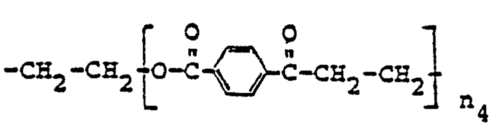 $n_4 = 1 - 7$

Die Herstellung dieser Polyesterpolycarbonsäuren erfolgt nach bekannten Verfahren in der Regel so, daß die Polycarbonsäuren und Polyole zusammen aufgeschmolzen werden und das freiwerdende Wasser eventuell durch Anlegen von Vakuum bzw. durch Ausblasen mit Stickstoff entfernt wird. Der Reaktionsverlauf kann dabei durch Titration der überschüssigen Carboxylgruppen verfolgt werden, so daß das

Ende der Reaktion leicht bestimmt werden kann.

Selbstverständlich können auch Hydroxylgruppen-enthaltende Polyester, die nach bekannten Verfahren aus Polycarbonsäuren, -anhydriden, -säurechloriden und/oder -alkylester und Polyolen hergestellt werden, mit Polycarbonsäuren und -anhydriden zu den erfindungsgemäß einzusetzenden Polyesterpolycarbonsäuren umgesetzt werden. Es ist natürlich auch möglich, solche hydroxylgruppenhaltigen Polyester mit niedermolekularen sauren, d.h. carboxylgruppenhaltigen Polyestern zu den erfindungsgemäß einzusetzenden Polyesterpolycarbonsäuren umzusetzen.

Werden verzweigte Polyesterpolycarbonsäuren benötigt, so kann dies so erfolgen, daß alle Komponenten, die einen mindestens trifunktionellen Alkohol bzw. eine mindestens trifunktionelle Polycarbonsäure enthalten, nach den oben beschriebenen Verfahren durch Schmelzkondensation zu einem verzweigten Polyester kondensiert werden.

Es kann aber auch das mindestens trifunktionelle Polyol zusammen mit den Dicarbonsäuren bzw. -derivaten zu einem kurzkettigen Carboxylgruppen bzw. -derivate enthaltenden Polyester umgesetzt werden, welcher dann mit weiteren Diolen und Dicarbonsäuren zu den erfindungsgemäß einzusetzenden Polyesterpolycarbonsäuren kondensiert wird.

Selbstverständlich kann auch eine mindestens trifunktionelle Polycarbonsäure mit Diolen zu einem hydroxylgruppenhaltigen verzweigten kurzkettigen Polyester reagieren, welche mit weiteren Diolen und Dicarbonsäuren zu den erfindungsgemäß zu verwendenden Polyesterpolycarbonsäuren weiter reagiert.

Verzweigte Polyesterpolycarbonsäuren sind natürlich auch erhältlich, wenn solche mindestens trifunktionelle Polycarbonsäuren mit dem oben beschriebenen hydroxylgruppenhaltigen Polyester zur Reaktion gebracht werden.

Eine weitere Gruppe von carboxylgruppenhaltigen Polymeren stellen die carboxylgruppenhaltigen Copolymerisate dar, welche aus copolymerisierten Einheiten von 2-25 Gew.-% mindestens einer copolymerisierbaren α,β-ethylenisch ungesättigten Carbonsäure mit 3-5 C-atomen und 75-98 Gew.-% mindestens eines weiteren copolymerisierbaren Monomeren bestehen. Die α,β-ethylenisch ungesättigten Carbonsäuren können Monocarbonsäuren oder Dicarbonsäuren oder Halbester der Dicarbonsäuren mit 1-12 C-Atome in der Alkoholkomponente sein.

Als copolymerisierbare Monomere seien beispielhaft genannt :

1. Ester der Acryl- oder Methacrylsäure mit aliphatischen $C_1$-$C_{12}$, cycloaliphatischen $C_5$-$C_6$, araliphatischen $C_7$-$C_8$ Monoalkoholen, beispielsweise Methylacrylat, Ethylacrylat, n-Propylacrylat, Isopropylacrylat, n-Butylacrylat, tert.-Butylacrylat, 2-Methylhexylacrylat, 2-Ethylhexylacrylat, Dodecylacrylat und die entsprechenden Methacylsäureester und Maleinsäurediester ; Cyclopentylacrylat, Cyclohexylacrylat oder die entsprechenden Methacrylsäureester und Maleinsäurediester ; Benzylacrylat, β-Phenylethylacrylat, entsprechende Methacrylsäureester und Maleinsäurediester ;

2. Aromatische Vinyl- und Vinylidenverbindungen, beispielsweise Styrol, α-Methylstyrol, α-Methyl-p-isopropylstyrol, α-Methyl-m-isopropylstyrol, o-, p-Chlorstyrol, o-, p-Bromstyrol, kernsubstituierte Methylstyrol, p-tert.-Butyl-styrol oder deren Mischungen ;

3. Vinylester organischer Monocarbonsäuren, wobei die Säurekomponente 2-4 C-Atome enthält, wie Vinylacetat und Vinylpropionat ;

4. Monoolefinisch ungesättigte Halogenkohlenwasserstoffe, wie Vinylchlorid oder Vinylidenchlorid, vorzugsweise Vinylchlorid ;

5. Acrylnitril, Methacrylnitril, Acrylamid, Methacrylamid ;

6. Vinylalkylether mit 1-4 C-Atomen in der Alkylgruppe, wie Vinylmethylether, Vinylethylether, Vinylpropylether, Vinylbutylether.

Bevorzugte carboxylgruppenhaltige Copolymerisate bestehen aus polymerisierten Einheiten von

a) 0-60 Gew.-% Styrol, α-Methylstyrol, o-, p-Chlorstyrol, o-, p-Bromstyrol, p-tert.-Butylstyrol oder deren Mischungen, vorzugsweise Styrol

b) 0-98 Gew.-% Acrylsäureester mit aliphatischen $C_1$-$C_8$-Alkoholresten oder Methacrylsäureester mit aliphatischen $C_1$-$C_8$-Alkoholresten oder deren Mischungen

c) 2-25 Gew.-% Acrylsäure, Methacrylsäure, Itaconsäure-, Maleinsäure- und Fumarsäurehalbester mit 1-8 C-Atomen in der Alkoholkomponente oder deren Mischungen, vorzugsweise Acrylsäure und/oder Methacrylsäure

wobei die Summe der Prozentgehalte von a bis c 100 beträgt. Anstelle von c können auch 2-25 Gew.-% mindestens eines Hydroxylgruppen enthaltenden, olefinisch, ungesättigten, copolymerisierbaren Monomeren wie Hydroxyalkylester der Acryl-, Methacryl-, Malein-, Fumar- oder Itaconsäure mit 2-4 C-Atomen im Alkylrest im Copolymerisat vorhanden sein.

Bei der Verwendung der Hydroxylgruppen enthaltenden Monomeren werden dann Hydroxylgruppen enthaltenden Copolymerisate erhalten, die durch Umsetzung mit Carbonsäureanhydriden wie z.B. Bernsteinsäureanhydrid in carboxylgruppenhaltige Copolymerisate übergeführt werden können.

Unter Copolymerisaten werden nicht nur Copolymerisate mit statistischer Verteilung der einpolymerisierten Monomeren verstanden oder Blockcopolymerisate, sondern auch Pfropfcopolymerisate, bei denen auf ein vorgebildetes Homo- oder Copolymerisat Monomere aufgepfropft worden sind. Statistische Copolymerisate sind bevorzugt.

Die Herstellung der erfindungsgemäß zu verwendenden carboxylgruppenhaltigen Copolymerisate erfolgt nach bekannten Verfahren der Substanz-, Lösungs- und Dispersionspolymerisation und Perlpolymerisation, vorzugsweise durch Lösungs- oder Substanzpolymerisation. Derartige Verfahren sind beispielsweise in Methoden der Organischen Chemie, Houben-Weyl, 4. Auflage, Band 14/1, Seiten 24-556 (1961) bzw. in der DE-A 2 600 318 und DE-A 1 965 740 beschrieben.

Wird in Lösung polymerisiert, so können Lösungsmittel wie Methylenchlorid, Ethanol, iso-Propanol, n-Propanol, n-Butanol, iso-Butanol, tert.-Butanol, Essigsäuremethyl-bis Essigsäure-butylester, Aceton, Methylethylketon, Benzol, Toluol u.a. eingesetzt werden.

Die Polymerisationen können bei Temperaturen von 40 °C bis etwa 180 °C durchgeführt werden.

Als Initiatoren können beispielsweise Percarbonate, Perester, wie tert.-Butylperpivalat, -Peroctoat, Benzoylperoxid, o-Methoxybenzoylperoxid, Dichlorbenzoylperoxid, Azodiisobuttersäuredinitril, in Mengen von 0,5 bis 3 Gew.-%, bezogen auf Monomere, eingesetzt werden.

Weiter können übliche Molekulargewichtsregler wie Thioglykol, Thioglycerin oder tert.-Dodecylmercaptan, mitverwendet werden.

Die Copolymerisatlösung wird in geeigneten Vorrichtungen, vorzugsweise Verdampferschnecken, bei Temperaturen von etwa 90 bis 180 °C vom Lösungsmittel befreit, beispielsweise nach dem Verfahren der DE-OS 2 005 691 abgekühlt, granuliert und vermahlen. Jedoch kann die Isolierung auch nach anderen Verfahren erfolgen, etwa durch Sprühtrocknung, Entfernung des Solvens mit Wasserdampf und gleichzeitiges Dispergieren in Wasser oder gemäß der DE-OS 2 008 711 durch Ausfällen mit Wasser aus einem mit Wasser mischbaren Lösungsmittel.

Wird in Substanz polymerisiert, so können im Anschluß an die Polymerisation flüchtige Bestandteile (Katalysatorzerfallprodukte, Monomerverunreinigungen) im Vakuum kontinuierlich oder diskontinuierlich abgezogen werden. Das Entfernen der flüchtigen Bestandteile kann hierbei auch durch Dünnfilmverdampfung erfolgen.

Die erfindungsgemäß einzusetzenden carboxylgruppenhaltigen Polymeren sollten eine Säurezahl von 10-150 mg KOH/g Substanz, vorzugsweise von 20-120 mg KOH/g Substanz, insbesondere von 30 bis 50 mg KOH/g Substanz aufweisen.

Bei einem Verzicht auf höhere Reaktivität kann die Säurezahl bei den Polymeren gesenkt werden, was eine Erhöhung der Einbrenntemperatur zur Folge haben könnte.

Die carboxylgruppenhaltigen Polymeren sollen bei Raumtemperatur leicht pulverisierbare Harze sein, die einen Erweichungs- bzw. Schmelzbereich (DTA) zwischen 20 °C und 150 °C, vorzugsweise 50 °C und 120 °C aufweisen.

Die carboxylgruppenhaltigen Polymeren und die N,N',N''-Triglycidyl-triazolidin-3,5-dione werden in solchen Mengenverhältnissen eingesetzt, daß auf eine Carboxylgruppe 0,5 bis 1,5 Mol, vorzugsweise 0,9 bis 1,1 Mol Epoxidgruppen entfallen. Die Mengenverhältnisse können in speziellen Fällen jedoch auch darüber oder darunter liegen.

Den erfindungsgemäßen Bindemitteln können Hilfs- und Zusatzstoffe, wie Katalysatoren in geeigneter Dosierung (0,01 bis 5 Gew.-%, bezogen auf Bindemittel) zur Beschleunigung des Einbrennvorgangs zugesetzt werden. Als solche sind basisch reagierende chemische Verbindungen bekannt, die je nach ihrer Art die Eigenreaktion der epoxidischen Komponente oder lediglich eine Aktivierung bewirken. Geeignete Katalysatoren sind tert. Amine, Ammoniumsalze, z.B. Tetrabutylammoniumjodid, Sulfoniumsalze, Lewissäuren wie Bortrifluorid-Addukte oder öllösliche Metallverbindungen wie Dibutylzinndioctoat.

Weitere Zusatzstoffe sind inerte Füllstoffe und wärmestabile organische oder anorganische Pigmente in ihren gewöhnlichen wirksamen Anteilen bis zu 150 Gew.-%, bezogen auf Bindemittel.

An Pigmenten seien beispielhaft genannt : Titandioxid, Eisenoxide, Chromoxid, Phthalocyanin- und Azopigmente.

Als weitere erfindungsgemäß einzusetzende Hilfs- und Zusatzstoffe empfiehlt sich in den meisten Fällen die Mitverwendung von an sich bekannten Verlaufsmitteln wie z.B. handelsübliche Butylacrylatoligomere, handelsübliche Silikonöle und/oder deren Mischungen mit Acrylatharzen mit geeignetem Schmelz- und Fließverhalten, handelsübliche Tenside (handelsübliche Perfluorverbindungen und Fettalkoholsulfonate an sich bekannter Art) oder andere Harze mit geeignetem Fließ- und Schmelzverhalten und geeigneter Wirkung auf die Oberflächenspannung der erfindungsgemäßen Bindemittel. Die Verlaufsmittel können in Mengen von 0,1 bis 5 Gew.-%, bezogen auf Bindemittel, eingesetzt werden.

Auch ist es zuweilen ratsam, dem Bindemittel Substanzen in geeigneter Dosierung zuzusetzen, die als sogenannte Entlüftungsmittel dienen. Als solches ist z.B. Benzoin bekannt.

Auch kann es von gelegentlichem Nutzen sein, sogenannte Quencher zur Verbesserung der Wetterstandsfestigkeit der Beschichtungen zuzusetzen. Als praxisbekannt gelten hier Zusätze von handelsüblichen Salzen quartärer Amine oder tert. Amine analog dem 2,2,6,6-Tetramethylpiperidin.

Die Herstellung der Beschichtungspulver erfolgt üblicherweise so, daß das Bindemittel, bestehend aus einem N,N',N''-Triglycidyl-triazolidin-3,5-dion und Carboxylgruppen enthaltenden Polymeren mit organischen oder anorganischen Pigmenten, gegebenenfalls mit einem Katalysator, Verlaufsmittel und/oder anderen Hilfsstoffen in handelsüblichen Mischern trocken vermischt wird.

Diese Ausgangsmischung, auch Dry-Blend oder Premix genannt, kann nur in seltenen Fällen als Pulverbeschichtungsmittel verwendet werden. Im allgemeinen erfolgt eine Homogenisierung bzw. eine Dispergierung des Pigmentanteils durch Extrusion oder ähnliche Dispergierverfahren.

Hierbei kann man in praxisüblicher Weise die Ausgangsmischung in einem praxisüblichen Extruder

bei einer Temperatur von 70 °C-140 °C, vorzugsweise jedoch 100 °C-120 °C bei einer Verweilzeit von 1/2 bis 3 Minuten homogenisieren. Das gegebenenfalls nach beschleunigter Kühlung erstarrte Extrudat wird in an sich bekannter Weise nach geeigneter Grobzerkleinerung auf einer Stift- oder Gebläsemühle auf eine durchschnittliche Korngröße von 20 bis 500 nm, vorzugsweise jedoch von 35 bis 60 nm, gemahlen. Gegebenenfalls können auch bestimmte Fraktionen ausgesiebt oder durch Windsichtung klassifiziert werden.

Das so hergestellte pulvrige Beschichtungsmittel kann je nach Art der gewählten Korngrößenverteilung nach dem EPS-Verfahren auf eine metallisches oder leitend eingestelltes Substrat versprüht und anschließend zur Härtung in z.B. 30 Minuten bei 160 °C oder in 5-10 Minuten bei 200 °C eingebrannt werden oder durch das Wirbelsinterverfahren oder durch das Flammspritzverfahren in an sich bekannter Weise verarbeitet werden.

Das Auftragen der pulverförmigen Bindemittel auf geeignete Unterlagen, insbesondere Metalle, erfolgt nach den bekannten Methoden des Tauch- bzw. Spritzbeschichtungsverfahrens wie nach den Wirbelsinter- bzw. Flammspritz- bzw. vorzugsweise nach dem elektrostatischen Pulversprühverfahren (40-90 kV). Vergl. D. R. Davis, « Coating with electrostatic dreyspray », in Platics Technology, Juni 1962, Seiten 37-38.

Man erhält z.B. bei elektrostatischer Verarbeitung Beschichtungen von einer Schichtdicke zwischen 25 bis 300 nm, vorzugsweise von 40-80 nm, die einen ausgezeichneten Glanz, hohe Härte und Elastizität, insbesondere Schlagelastizität, aufweisen und hervorragende Glanzhaltung und Kreidungsbeständigkeit bei der Freibewitterung zeigen.

Es muß als ausgesprochen überraschend angesehen werden, daß die mit dem erfindungsgemäßen Bindemitteln hergestellten Beschichtungen einen ausgezeichneten Glanz, hohe Härte und Elastizität, insbesondere Schlagelastizität, aufweisen und hervorragende Glanzhaltung und Kreidungsbeständigkeit bei Freibewitterung zeigen. obwohl N,N',N''-Triglycidyl-triazolidin-3,5-dione einen nichtaromatischen Heterocyclus mit einer N-N-Bindung, die erfahrungsgemäß instabil ist und insbesondere durch thermische Belastung sehr leicht zerfällt, enthält.

Trotzdem besitzen N,N',N''-Triglycidyl-triazolidin-3,5-dione eine bessere thermische Beständigkeit als Triglycidylisocyanurat und führen zu weißen Beschichtungen, die in ihrem Weißgrad nach Berger deutlich günstiger liegen als mit Triglycidylisocyanurat hergestellte, auch wenn carboxyfunktionelle Polyester als Harzkomponente eingesetzt werden.

Dies ist sehr überraschend, da anzunehmen war, daß die N-N-Struktur in den N,N',N''-Triglycidyltriazolidin-3,5-dionen bei den Einbrennbedingungen wenigstens teilweise gespalten werden sollte und dadurch vergilbte Lackfilme erhalten werden.

Ein weiterer Vorteil der erfindungsgemäßen Bindemittel besteht in der verbesserten Lagerfähigkeit der daraus hergestellten Beschichtungspulver, so daß deren Einsatz auch in subtropischen und tropischen Klimazonen gewährleistet ist. Trotzdem brauchen, da N,N',N''-Triglycidyl-triazolidin-3,5-dione für carboxylgruppenhaltige Polymere ein ausgeglichenes Verhältnis zwischen Reaktivität und Lagerfähigkeit zeigt, keine ungünstigeren Einbrennbedingungen in Kauf genommen werden. Ferner wird durch N,N',N''-Triglycidyl-triazolidin-3,5-dione eine deutliche Verbesserung der Schlagelastizität und des Verlaufs der Beschichtungen erzielt.

Die Pulver dienen zur Beschichtung von Haushaltsgeräten, vor allen Dingen von Metallteilen, von Metallteilen im Automobilbau, von Metallteilen, die starken Witterungseinflüssen ausgesetzt sind, wie Fassadenbleche, Rohre, Drahtgeflechte, von Geräten für die Forst- und Landwirtschaft, Fahrrad- und Motorradrahmen, Bau- und Installationselemente, Gehäuse für Leuchtstoffröhren und Lichtanlagen.

Die Überzüge dienen in erster Linie als Korrosionsschutz bzw. als Schutz gegen mechanischen Verschleiß für Gegenstände aus Metallen wie z.B. aus Stahl, Stahlguß, Kupfer, Messing, Bronze, Rotguß, Aluminium und dessen Legierungen, verzinkte Untergunde, aber auch aus Porzellan, Keramik, Kunststoff und auch einigen Holzarten. Sie können ferner als elektrisch isolierende Überzüge in der Elektrotechnik, z.B. für Leuchten, Schalter, Motorenteile u.a. verwendet werden. Nach dem Wirbelsinterverfahren können z.B. Haushaltsgeräte, Kühlschrankroste, Kleiderablagen, Dekorationsgegenstände, Bedienungs- und Flaschenkörbe, Rohre u.a. beschichtet werden. Nach dem Flammspritzverfahren und nach dem elektrostatischen Pulverbeschichtungsverfahren werden zweckmäßigerweise größere Flächen der oben genannten Materialien beschichtet. Sie finden z.B. Anwendung beim Außen- und Innenbeschichten von Rohren, Behältern u.a. Bevorzugt werden die Bindemittel wegen ihres ausgezeichneten Verlaufs bei der Automobilzubehördecklackierung eingesetzt.

Die in den Beispielen angegebenen Teile und Prozente beziehen sich auf das Gewicht, sofern nicht anders vermerkt.

Herstellung des N,N',N''-Triglycidyl-triazolidin-3,5-dions

In einem 4 l-Dreihalskolben, der mit Rührer, Thermometer und Rückflußkühler ausgestattet ist, werden 101 g (1 Mol) Triazolidin-3,5-dion, 2 775 g (30 Mol) Epichlorhydrin und 2 ml Triethylamin mittels Oelbad auf 80 °C erwärmt. Die Mischung reagiert exotherm, so daß das Oelbad entfernt werden kann. Nach dem Abklingen der exothermen Reaktion wird bei 80 °C weitergerührt, so daß insgesamt 10 Stunden bei 80 °C gehalten werden. Zu dieser Lösung werden bei 30° bis 40 °C 250 g 50 %ige

Natronlauge innerhalb 4 Stunden so zugetropft, daß das zugegebene und das bei der Reaktion entstehende Wasser durch azeotrope Destillation bei 30 bis 60 Torr mittels Wasserabscheider laufend entfernt wird. Zur vollständigen Reaktion wird noch eine Stunde nachgerührt und das entstandene Kochsalz durch Filtration abgetrennt. Das Kochsalz wird 2 mal mit 200 g Epichlorhydrin gewaschen und die vereinigten Epichlorhydrinlösungen werden mit 200 ml Wasser ausgewaschen. Nach dem Trocknen der organischen Phase über Natriumsulfat wird das Lösungsmittel durch Einengen am Rotationsverdampfer entfernt und der Rückstand zuletzt bei 80 °C und 0,2 mbar bis zur Gewichtskonstanz getrocknet. Es werden 240 g eines hellbraunen, viskosen Öls erhalten, dessen Epoxidwert mit 0,93 bestimmt wurde und dessen Chlorgehalt = 2,75 % Gesamtchlor beträgt. Das viskose Öl kristallisiert nach einigen Stunden bis Tagen durch. Durch Auflösen in Methanol und nachfolgendem Abkühlen auf 5 °C kristallisiert das praktisch reine N,N',N''-Triglycidyl-triazolidin-3,5-dione vom Fp. 98-103 °C aus. IR- und NMR-Spektren sowie Elementaranalyse und Epoxidbestimmung bestätigen die angenommene Struktur:

berechnet: C = 49,1 % H = 5,57 % N = 15,6 %
Epoxidwert = 1,13

gefunden: C = 49,0 % H = 5,6 % N = 15,5 %
Epoxidwert = 1,10

Werden auf 1 Mol Triazolidin-3,5-dion 3 bis 30 Mol Epichlorhydrin eingesetzt und analog vorstehender Vorschrift weiterverarbeitet, so können die Epoxidwerte des erhaltenen, teilweise höherkondensierten N,N',N''-Triglycidyl-triazolidin-3,5-dions 0,6-1,0 und die Chlorwerte 0 bis 3 Gew.-% betragen.

## Beispiel 1

62,57 Gew.-Tle. eines Polyesterharzes mit einem Schmelz- bzw. Erweichungspunkt von 73 °C (DTA), einer Säurezahl (SZ) von 40 (DIN 53 402) und einer OH-Zahl von 8-9 (DIN 53 240), welches aus Terephthalsäure (68,64 Gew.-Tle.), Isophthalsäure (10,27 Gew.-Tle.), Neopentylglykol (22,29 Gew.-Tle.), Ethylenglykol (13,29 Gew.-Tle.) und Glycerin (2,29 Gew.-Tle.) durch Schmelzkondensation unter Wasserabspaltung hergestellt wurde, werden mit 4,13 Gew.-Tln. N,N',N''-Triglycidyl-triazolidin-3,5-dion (Epoxidwert 1,1), 32,8 Gew.-Tln. handelsüblichem Titandioxid-Pigment (Rutil Typ) und 0,5 Gew.-Tln. eines Verlaufsmittels (Copolymerisat aus 70 Gew.-% 2-Ethylhexylacrylat- und 30 Gew.-% Ethylacrylateinheiten), trocken vermischt.

Diese Ausgangsmischung wird in einem praxisüblichen Extruder bei einer Temperatur von 100 °C homogenisiert. Das nach der Kühlung erstarrte Extrudat wird nach geeigneter Grobzerkleinerung auf einer Stift- oder Gebläsemühle auf eine durchschnittliche Korngröße von 35-60 nm gemahlen und mit einer Negativspannung von 90 kV elektrostatisch auf Eisenbleche von geeigneter Größe und Stärke und mit praxisüblicher Vorbehandlung durch Zinkphosphatierung aufgetragen.

Nach dem Einbrennen in 10 Minuten bei 200 °C wurden Beschichtungen von durchschnittlich 60 nm erhalten, die einen ausgezeichneten Glanz, hohe Härte und Elastizität, insbesondere Schlagelastizität aufweisen und hervorragende Glanzhaltung und Kreidungsbeständigkeit bei der Freibewitterung zeigen.

## Beispiel 2

62,57 Gew.-Tle. eines Polyesterharzes, hergestellt aus Terephthalsäure (67,34 Gew.-Tle), Isophthalsäure (10,15 Gew.-Tle), Neopentylglykol (22,07 Gew.-Tle.), Ethylenglykol (13,15 Gew.-Tle.) und Trimethylolpropan (3,29 Gew.-Tle.) mittels Schmelzkondensation, welches einen Schmelz- und Erweichungspunkt von 69-75 °C (DTA), eine Säurezahl von 40 (DIN 53 402) und eine OH-Zahl von 8-9 (DIN 53 420) aufweist, werden mit 4,13 Gew.-Tle. N,N',N''-Triglycidyl-triazolidin-3,5-dion (Epoxidwert 1,1) und mit Zusätzen wie in Beispiel 1 vermischt und wie dort beschrieben zu einem Beschichtungspulver verarbeitet. Nach dem Auftragen durch elektrostatisches Versprühen bei einer Negativspannung von 90 kv erhält man Beschichtungen von durchschnittlich 60 nm Schichtdicken, die hohen Weißgrad (nach berger), hervorragende Haftung und hohe Dehnungs- und Schlagelastizität aufweisen.

Kurz-Zeit-Test im Atlas Weather-o-meter (Typ Sunshine XW, Cyclus 17 : 3 Beanspruchung entsprechend ASTM E 42-64 Typ E), Salzsprüh- und Tropentest lassen ausgezeichnete Glanz- und Kreidungsbeständigkeit bei der Freibewitterung und ausgezeichnete korrosionsschützende Eigenschaften und Dauerhaftfestigkeit erwarten.

## Beispiel 3

63,5 Gew.-Tle. Polyester, hergestellt aus Terephthalsäure (58,5 Gew.-Tle.), Isophthalsäure (14,0 Gew.-Tle.), Trimellithsäure (1,5 Gew.-Tle.) Neopentylglykol (33,8 Gew.-Tle.), Ethylenglykol (3,7 Gew.-Tle.) und Hexandiol-1,6 (4,6 Gew.-Tle.) mit einem Schmelz- bzw. Erweichungspunkt von 66 °C (DTA), einer Säurezahl von 30 (DIN 53 402) und einer OH-Zahl von ca. 6 (DIN 53 420) werden mit 3,2 Gew.-Tln. N,N',N''-Triglycidyl-triazolidin-3,5-dion (Epoxidwert 1,1) mit 32,8 Gew.-Tln. eines Titandioxid-Pigments (Rutil-Typ) sowie 0,5 Gew.-Tle. des Verlaufsmittels gemäß Beispiel 1 trocken vermischt. Sodern Harz und Härter nicht in einer gebrauchsfähigen Lieferform vorlagen, wurden diese Bestandteile auf einer

Schlagmühle vorzerkleinert, wobei eine Größe der Harz-Härter-Bestandteile von ca. 1 $mm^3$ angestrebt wurde.

Die Mischung (Dry Blend, Premix) wurde wie im Beispiel 2 extrudiert, gemahlen und gesiebt bzw. klassifiziert und mit einer Negativspannung von 90 kv elektrostatisch auf Eisenbleche von geeigneter Größe und Stärke und mit praxisüblicher Vorbehandlung durch Zinkphosphatierung aufgetragen.

Nach dem Einbrennen in 10 Minuten bei 200 °C wurden Beschichtungen von durchschnittlich 60 nm erhalten, die hohen Glanz, gute Dehnungs- und Schlagelastizität auf wiesen und auf dem Substrat hervorragend hafteten.

Die im Kurzzeit-Test durch Weather-o-meter-Exposition erzielten Werte lassen eine gute Glanz- und Kreidungsbeständigkeit bei der Freibewitterung erwarten.

Beispiel 4

61,8 Gew.-Tle. einer Polyesterpolycarbonsäure, welche mittels Schmelzkondensation aus Terephthalsäure (56,5 Gew.-Tle.), Isophthalsäure (10,0 Gew.-Tle.), Neopentylglykol (38,3 Gew.-Tle.) und 1,4-Dimethylolcyclohexan (3,8 Gew.-Tle.) hergestellt wurde und deren Schmelz- bzw. Erweichungspunkt 71 °C (DTA), deren Säurezahl ca. 50 (DIN 53 402) und deren OH-Zahl 4-5 (DIN 53 240) beträgt, werden mit 4,9 Gew.-Tln. N,N',N''-Triglycidyl-triazolidin-3,5-dion (Epoxidwert 1,1) und mit den mengenmäßig gleichen Zusätzen und in gleicher Weise wie im Beispiel 3 zu einem gebrauchsfertigen EPS-Pulverbeschichtungsmaterial verarbeitet und auf Probebleche aus Aluminium von geeigneter Größe und Stärke nach praxisüblicher Vorbehandlung durch Grün- oder Gelbchromatierung bei 90 kV Negativ-Spannung aufgesprüht und 15 Minuten bei 180 °C eingebrannt.

Es wurden Beschichtungen von durchschnittlich 60 nm erhalten, die in den Eigenschaften weitgehend denen gemäß Beispiel 3 entsprechen.

Beispiel 5

63,5 Gew.-Tle. eines Polyesters, mit einem Schmelz- bzw. Erweichungspunkt von 72 °C (DTA), einer Säurezahl von ca. 32 (DIN 53 402) und einer OH-Zahl von ca. 2 (DIN 53 240), welcher aus Terephthalsäure (62,8 Gew.-Tle.), Isophthalsäure (9,4 Gew.-Tle.) und Neopentylglykol (42,6 Gew.-Tle.) hergestellt wurde, werden mit 3,2 Gew.-Tln. N,N',N''-Triglycidyl-triazolidin-3,5-dion (Epoxidwert 1,1) und mit den gleichen Zusätzen wie in Beispiel 3 versehen und in gleicher Weise zu einem gebrauchsfertigen Beschichtungspulver verarbeitet und anschließend auf Eisenbleche wie im Beispiel 4 unter gleichen Bedingungen aufgetragen und 10 Minuten bei 200 °C eingebrannt. Die erzielten Eigenschaften der lackierten Bleche waren mit denen aus Beispiel 4 nahezu identisch.

Beispiel 6

Es wurde wie im Beispiel 5 verfahren, wobei jedoch in Abweichung hiervon die Mahlung so vorgenommen wurde, daß ein Beschichtungspulver mit einer Korngröße von 80-400 µm entstand. Praxisgemäß vorbehandelte Prüfkörper aus massivem Eisen wurden auf 250 °C vorerwärmt und in ein fluidisiertes Wirbelbett, welches mit dem beispielgemäßen Beschichtungspulver gefüllt war, eingetaucht und anschließend zur Sicherstellung einer einwandfreien Überführung in den duroplastischen Zustand noch 15 Minuten bei 200 °C nacherwärmt.

Es wurden hervorragend verlaufende Beschichtungen von durchschnittlich 500 nm erzielt, die jedoch wegen der Art der Prüfkörpers nicht mehr auf ihre erwartungsgemäß hervorragenden mechanischen Eigenschaften geprüft werden konnten.

Beispiel 7

55,9 Gew.-Tle. eines Copolymerisats aus copolymerisierten Einheiten von 48 Gew.-% von Styrol, 37 Gew.-%, Butyl-acrylat und 15 Gew.-% Acrylsäure, hergestellt gemäß den Bedingungen der DE-B 2 304 847, welches eine SZ von ca. 100 (DIN 53 402) und einen Schmelz- bzw. Erweichungspunkt von 60 °C (DTA) aufweist, wurden mit 4,7 Gew.-Tln N,N',N''-Triglycidyl-triazolidin-3,5-dion (Epoxidwert 1,1) und mit den Zusätzen wie in Beispiel 1 verarbeitet und auf die vorbeschriebene Eisenbleche aufgesprüht und 35 Minuten bei 170 °C eingebrannt. Es wurden Beschichtungen von hohem Weißgrad (nach Berger) und befriedigender Dehnungselastizität erzielt. Kurz-Zeit-Test im Weather-o-meter lassen eine befriedigende Kreidungs-Wetterbeständigkeit erwarten.

Beispiel 8

63,6 Gew.-Tle. eines Copolymerisats, welches nach dem in der DE-A 2 600 318 beschriebenen Verfahren mittels UV-Licht in Substanz hergestellt wurde und aus copolymerisierten Einheiten von 30 Gew.-% Styrol, 41 Gew.-% Methylmethacrylat, 25 Gew.-% Butylacrylat und 4 Gew.-% Acrylsäure bestand, mit einem Schmelz- bzw. Erweichungspunkt von ca. 40-50 °C (DTA) und einer SZ von ca. 30 (DIN 53 402)

wurden mit 3,6 Gew.-Tln. N,N',N''-Triglycidyl-triazolidin-3,5-dion (Epoxidwert 0,95) und mit Zusätzen wie in Beispiel 1 verarbeitet und auf Eisenbleche aufgesprüht. Nach dem Einbrennen in 15 Min. bei 180° wurden Beschichtungen von durchschnittlich 60 nm Schichtdicke und hervorragendem Weißgrad (nach Berger) erzielt. Diese Beschichtungen wiesen gute Dehnungs- und befriedigende Schlagelastizität auf und lassen nach dem Kurz-Zeit-Test im Weather-o-meter hervorragende Glanz- und Kreidungsbeständigkeit erwarten.

Beispiel 9

63,6 Gew.-Tle. eines Copolymerisats aus copolymerisierten Einheiten von 30 Gew.-% Styrol, 36 Gew.-% Methylmethacrylat, 30 Gew.-% Butylacrylat und 4 Gew.-% Acrylsäure mit einem Schmelz- bzw. Erweichungspunkt von ca. 40-50 °C (DTA) und einer SZ von ca. 30 (DIN 53 402) wurden mit 3,1 Gew.-Tln N,N',N''-Triglycidyl-triazolidin-3,5-dion (Epoxidwert 1,1) und mit Zusätzen wie in Beispiel 1 versetzt und zu einem Beschichtungspulver gemäß Beispiel 1 verarbeitet und aufgesprüht. Nach dem Einbrennen in 15 Minuten bei 180 °C wurden Beschichtungen von durchschnittlich 40-60 nm Schichtdicke und hervorragendem Weißgrad (nach Berger) erhalten. Die Beschichtungen wiesen gute Dehnungs- und Schlagelastizität auf und lassen nach dem Kurz-Zeit-Test im Weather-o-meter hervorragende Glanz- und Kreidungsbeständigkeit erwarten.

Beschichtungen nach den Beispielen 7 bis 9 zeigen ferner infolge ihres nahezu unverseifbaren Charakters ausgezeichnete Beständigkeitseigenschaften gegen chemische Agenzien, insbesondere Haushaltschemikalien und besitzen eine ausgezeichnete Waschlaugen-, Kochwasser- und Lösungsmittelbeständigkeit.

Alle Beschichtungen gemäß den Beispielen 1 bis 9 zeigen nach Prüfung im Salzsprühtest (DIN/53167/50021), Tropentest (DIN 50017) und Kesternich-Test (DIN 50018) ausgezeichnete korrosionsschützende Eigenschaften ohne Unterfilmkorrosion.

Vergleichsbeispiele

a) 94 Gew.-Tle eines Polyesterharzes, hergestellt aus Terephthalsäure (62,8 Gew.-Tle), Isophthalsäure (9,4 Gew.-Tle) und Neopentylglykol (42,6 Gew.-Tle) mittels Schmelzkondensation, welches eine Säurezahl von 35 aufweist, werden mit 6 Gew.-Tln N,N',N''-Triglycidyl-triazolidin-3,5-dion und den Zusätzen wie im Beispiel 1 vermischt und, wie dort beschrieben, zu einem Beschichtungspulver verarbeitet.

b) Analog Vergleichsbeispiel a) werden 93 Gew.-Tle des Polyesterharzes aus Vergleichsbeispiel a) mit 7 Gew.-Tln Triglycidyl-isocyanurat und den ansonsten gleichen Zusätzen und unter gleichen Bedingungen zu einem Beschichtungspulver verarbeitet.

Nach dem Auftragen durch elektrostatisches Versprühen bei einer Negativspannung von 90 kv und dem Einbrennen in 10 Min. bei 200 °C erhält man Beschichtungen von durchschnittlich 60 nm Schichtdicke, deren Glanzbeständigkeit im Atlas-Weather-o-meter (Typ Sunshine XW, Cyclus 17 : 3) geprüft wurde. Die einzelnen Glanzwerte, gemessen nach Gardner (20° bzw. 60°), ASTM D-523-53 T, wurden in Abhängigkeit von der Zeit in einem Diagramm zusammengestellt.

Aus dem nachstehenden Diagramm (Figur 1) ist klar ersichtlich, daß die Glanzbeständigkeit bei dem mit Triglycidyl-triazolidin-3,5-dion hergestelltem Lackfilm (Kurve a) über die gesamte Prüfdauer besser ist als der mit Triglycidyl-isocyanurat hergestellte Lackfilm (Kurve b), was auf eine größere Stabilität von mit Triglycidyl-triazolidin-3,5-dion vernetzten Lackfilmen zurückzuführen ist.

**Ansprüche**

1. Pulverlackbindemittel aus homogenen, vernetzbaren Mischungen von

A. mindestens einem mehr als eine Carboxylgruppe enthaltendem Polymeren mit einen Schmelz- bzw. Erweichungspunkt von 20 °C-150 °C, bestimmt mittels Differential-Thermo-Analyse und mit einer Säurezahl von 10-150 mg KOH/g Substanz und

B. mindestens einem 1,2-Polyepoxid ; A und B sind in einem solchen Verhältnis abgemischt, daß auf eine Carboxylgruppe 0,5 bis 1,5 1,2-Epoxidgruppen entfallen, dadurch gekennzeichnet, daß das 1,2-Polyepoxid ein N,N',N''-Triglycidyltriazolidin-3,5-dion mit einem Epoxidwert von 0,6 bis 1,13 ist.

2. Pulverlackbindemittel gemäß Anspruch 1, dadurch gekennzeichnet, daß 1,2-Polyepoxid ein N,N',N''-Triglycidyl-triazolidin-3,5-dion der Formel

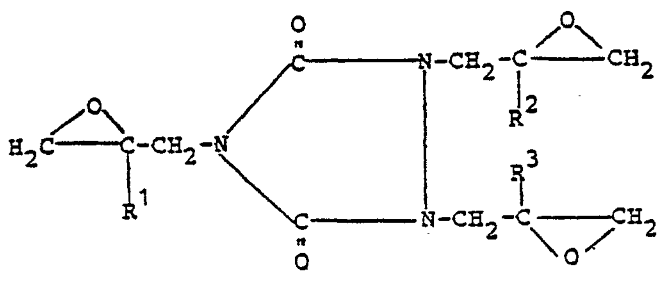

ist, worin $R^1$, $R^2$ und $R^3$ gleich oder verschieden ein Wasserstoffatom oder eine Methylgruppe bedeuten.

3. Pulverlackbindemittel gemäß Anspruch 1, dadurch gekennzeichnet, daß das Carboxylgruppen enthaltende Polymere ein Polyester oder ein Copolymerisat mono-olefinisch ungesättigter Monomerer ist.

4. Verfahren zur Herstellung von pulverförmigen Überzugs- bzw. Beschichtungsmitteln, dadurch gekennzeichnet, daß die Mischung aus

A. mindestens einem mehr als eine Carboxylgruppe enthaltendem Polymeren mit einen Schmelz- und Erweichungspunkt von 20-150 °C, bestimmt mittels Differential-Thermo-Analyse und mit einer Säurezahl von 10-150 mg KOH/g Substanz,

B. einem N,N',N''-Triglycidyl-trizolidin-3,5-dion mit einem Epoxidwert von 0,6 bis 1,13, wobei auf eine Carboxylgruppe 0,5 bis 1,5 1,2-Epoxidgruppen enthalten und gegebenenfalls

C. Hilfs- und Zusatzstoffen

in einem Extruder bei einer Temperatur von 70 bis 140 °C, homogenisiert und das erstarrte schmelzbare und unvernetzte Extrudat auf eine durchschnittliche Korngröße von 20 bis 500 μm, gemahlen wird.

**Claims**

1. Powder lacquer binder compositions comprising homogenous cross-linkable mixtures of

A. at least one polymer containing more than one carboxyl group and having a melting and softening point of from 20 °C to 150 °C, as determined by means of differential thermoanalysis, and having an acid number of from 10 to 150 mg of KOH/g of substance and

B. at least one 1,2-polyepoxide ; A and B are mixed in such a ration that there are 0.5 to 1.5 1,2-epoxide groups per carboxyl group, characterised in that the 1,2-polyepoxide is an N,N',N''-triglycidyl triazolidine-3,5-dione having an epoxide value of from 0.6 to 1.13.

2. Powder lacquer binder compositions according to Claim 1, characterised in that the 1,2-polyepoxide is an N,N',N''-triglycicyl triazolidine-3,5-dione of the formula

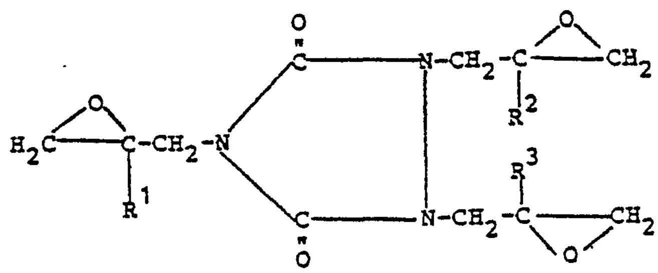

wherein $R^1$, $R^2$ and $R^3$, which may be the same or different, each represents a hydrogen atom or a methyl group.

3. Powder lacquer binder compositions according to Claim 1, characterised in that the polymer containing carboxyl groups is a polyester or a copolymer of mono-olefinically unsaturated monomers.

4. Process for the production of powder-form coating or covering compositions, characterised in that the mixture comprising

A. at least one polymer containing more than one carboxyl group and having a melting and softening point of from 20 °C to 150 °C, as determined by means of differential thermoanalysis, and having an acid number of from 10 to 150 mg of KOH/g of substance,

B. an N,N',N''-triglycidyl triazolidine-3,5-dione having an epoxide value of from 0.6 to 1.13, the mixture containing from 0.5 to 1.5 1,2-epoxide groups per carboxyl group, and optionally

C. auxiliaries and additives,

is homogenised in an extruder at a temperature of from 70 to 140 °C and the solidified, fusible, uncrosslinked extrudate is ground to an average particle size of from 20 to 500 μm.

**Revendications**

1. Liant en poudre pour peintures formé de mélanges homogènes réticulables de

A. au moins un polymère portant plus d'un groupe carboxyle ayant un point de fusion ou de ramollissement de 20 °C-150 °C, déterminé par l'analyse thermique différentielle, et un indice d'acide de 10-150 mg de KOH/g de substance et

B. au moins un 1,2-polyépoxyde ; A et B sont mélangés dans un rapport choisi de manière qu'il y ait 0,5 à 1,5 groupe 1,2-époxyde par groupe carboxyle, caractérisé en ce que le 1,2-polyépoxyde est une N,N',N''-triglycidyl-triazolidine-3,5-dione ayant un indice d'époxyde de 0,6 à 1,13.

2. Liant en poudre pour peintures suivant la revendication 1, caractérisé en ce que le 1,2-polyépoxyde est une N,N',N''-triglycidyl-triazolidine-3,5-dione de formule

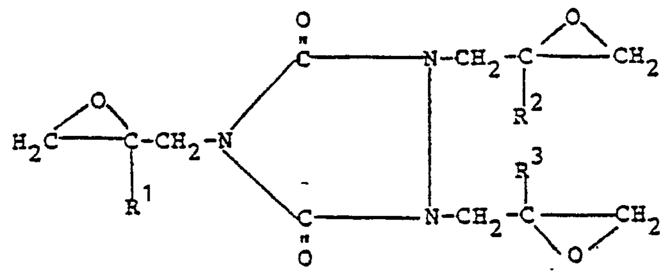

dans laquelle $R^1$, $R^2$ et $R^3$ sont égaux ou différents et représentent un atome d'hydrogène ou un groupe méthyle.

3. Liant en poudre pour peintures suivant la revendication 1, caractérisé en ce que le polymère porteur de groupes carboxyle est un polyester ou un copolymérisat de monomères à non-saturation mono-oléfinique.

4. Procédé de production de compositions de revêtement et d'enduction en poudre, caractérisé en ce que le mélange

A. d'au moins un polymère porteur de plus d'un groupe carboxyle de point de fusion et de ramollissement de 20-150 °C, déterminé par l'analyse thermique différentielle et d'indice d'acide de 10-150 mg de KOH/g de substance,

B. d'une N,N',N''-triglycidyl-triazolidine-3,5-dione d'indice d'époxyde de 0,6 à 1,13, portant 0,5 à 1,5 groupe 1,2-époxyde par groupe carboxyle et, le cas échéant

C. d'adjuvants et d'additifs

est homogénéisé dans une extrudeuse à une température de 70 à 140 °C et le produit extrudé solidifié, fusible et non réticulé, est broyé en particules d'une grosseur moyenne de 20 à 500 μm.

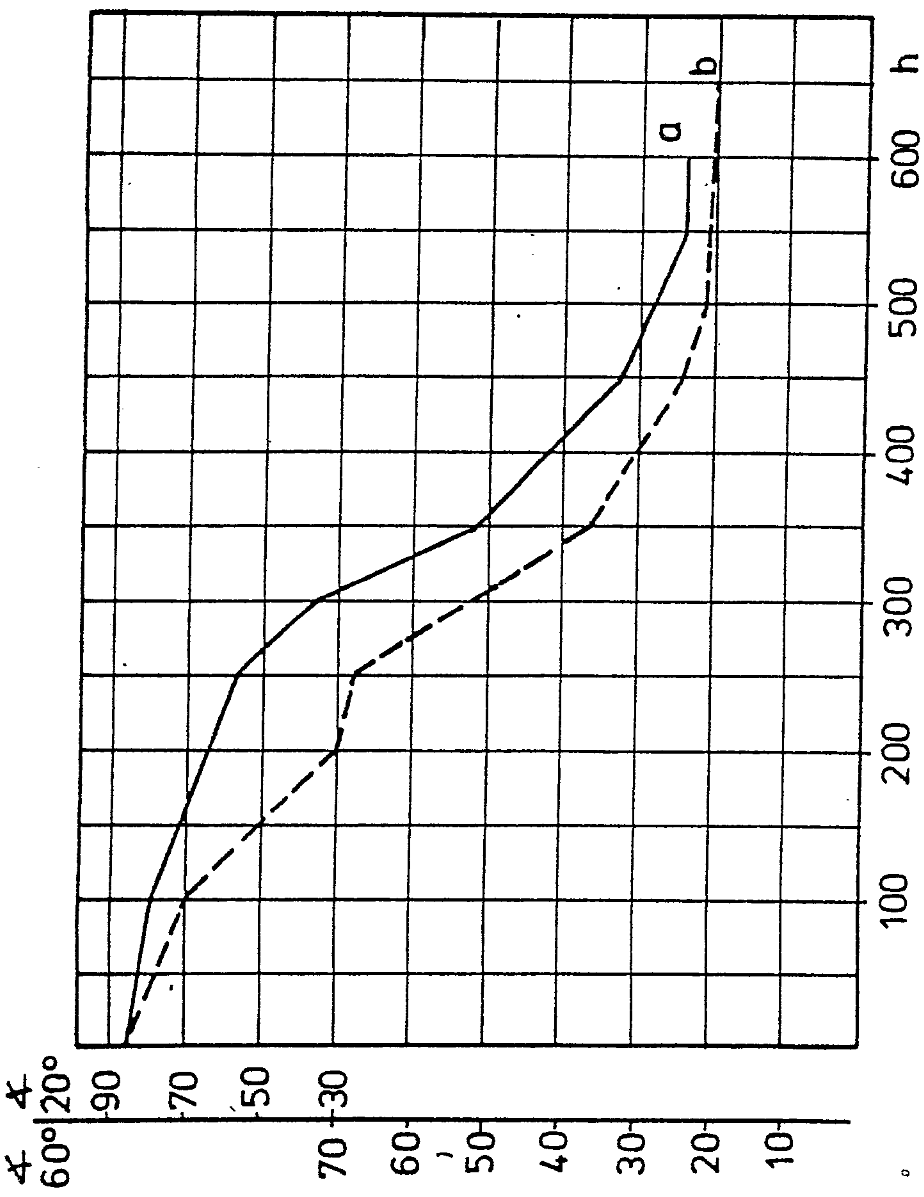


FIG. 1